# EUROPEAN PATENT APPLICATION

(11) **EP 2 517 856 A1**
(43) Date of publication of application: **31.10.2012**
(21) Application number: 11163007.5
(22) Date of filing: 19.04.2011
(51) Int. Cl.: B29B 17/02, B29C 51/14, B29C 53/04, B29C 70/02, B32B 7/12, B32B 27/10, B32B 27/12, B44C 5/04, B32B 37/12

(54) **Multi-layer laminate structure with reversible bonding**

(71) Applicant: Nijhuis, Willem Aloysius, 7591 PR Denekamp (NL)
(72) Inventor: Nijhuis, Willem Aloysius, 7591 PR Denekamp (NL)
(74) Representative: 't Jong, Bastiaan Jacob

(57) **Abstract**

Multi layer laminate structure comprising a substrate layer and at least one decorative layer bonded on the substrate layer. The substrate layer and the decorative layer are reversible bonded.

Process for forming the multi-layer laminate structure with reversible bonding comprising the steps of a) providing an adhesive film on a the substrate layer and/or on the decorative layer, b) placing the decorative layer on the substrate layer and c) fusion of the adhesive film(s).

Process to dismantle the multi-layer laminate structure comprising the steps of a) heating the multi-layer laminate structure and b) separating the substrate layer and the decorative layer.

## Description

The present invention relates to a multi-layer laminate structure, to a process for forming the multi-layer laminate structure and to a process for dismantling the multi-layer laminate structure. The multi-layer laminate structure comprises a substrate layer and at least one decorative layer bonded to the substrate layer.

Multi-layer laminate structures are used for decorative and construction purposes, in particular for demanding applications e.g. flooring, office furniture, wall cladding and wet rooms. These structures are in general produced in panels and may be formed to a desired product shape. In general the substrate layer consists of polyolefin and the decorative layer of a high pressure laminate (HPL). The substrate layer may have a decorative layers on one or both sides.

EP 2 186 636 discloses a multi-layer laminate structure and a process for the production of such structure. This multi-layer laminate structure is based on thermoplastic resins and decorative plastic laminates. According to the method disclosed the bonding of the thermoplastic resins with the decorative plastic laminate is thermally induced. This method requires plasma surface activation. Plasma surface activation is complicated. The method is restricted to the production of flat panel multi-layer laminate structures. The multi-layer laminate structure tolerates only a restricted (thermal) shape forming and not every desired shape may be formed. Moreover deformation of the laminate structures introduces undesired tensions in the structure. End of product life this multi-layer structure may not be dismantled in separate layers. Recycling in reusable starting material is not possible and therefore the structure and method according to EP 2 186 636 do not meet the cradle-to-cradle principle.

Also WO2009/033673 describes a multi-layer laminate structure and a process for the production of such structure. The substrate layer consists of fibre reinforced porous thermoplastic. The adhesive is anchored in the pores of the porous thermoplastic. A decorative layer is attached to the substrate layer by the adhesive. This multi-layer laminate structure is designed such that it is stiff and inflexible and accordingly does not tolerate (thermal) shape forming. End of product life this multi-layer structure may not be dismantled in separate layers. Recycling in reusable starting material is not possible and therefore also the structure and method according to WO2009/033672 do not meet the cradle-to-cradle principle.

The present invention intends to solve the problems of the prior art as described above, and it is in particular an objective of the invention to provide a multi-layer laminate structure that is more easily to be produced, that provides more design freedom and that is recyclable (in the individual components) at the end of product life. Moreover the invention intends to provide a process to produce such multi-layer laminate structure as well as a process for dismantling such multi-layer laminate structure.

The multi-layer laminate structure according to the invention comprises a substrate layer and a decorative layer which are reversible bonded. This structure has an optimal bend ability and requires less complicated bending techniques, for instance readily available vacuum table- and thermoforming techniques may be used. Simply by bending the structure before bonding or by reversing the bonding between the substrate layer and the decorative layer, followed by bending the structure and bonding (again), a large design freedom is obtained. The obtained shapes are more stable due to less internal tension. Also the difference between forward and backward bending is negligible. Moreover the structure is easily to dismantle in a separate substrate layer and a separate decorative layer. The structures meets in this the cradle-to-cradle principle for recycling of products at end of their life.

The reversible bonding may consist of an adhesive film on the substrate layer and/or an adhesive film on the decorative layer. The adhesive film may be a polyolefin resin which has good reversible bonding characteristics. The first adhesive film on the substrate layer and the second adhesive film on the decorative layer may be compatible such that an optimal bonding/disconnection is obtained.

A thermoplastic will in general provide optimal shape forming conditions to the substrate layer and in particular polyolefin's such as polypropylene and polyethylene are suitable. A substrate layer at least partly made of polypropylene may be provided with a living hinge.

According to the invention the substrate layer and the adhesive film may be co extruded. This intermediate product may be produced at lower costs and in different shapes. Such intermediate product may be kept longer in stock without the need to have it integrated in the final product before an expiration date on short time. This provides flexibility to the production of finished products as in a later stage it may be decided which decorative layer will be applied for the finished multi-layer laminate structure.

The substrate layer may be provided with a reinforced top layer, in particular a glass fiber top layer. This will result in a strong substrate layer with large impact resistance. In that embodiment the adhesive layer is provided on the reinforced top layer.

The substrate layer may be provided with a top layer having which laminate or wood flour embedded in the surface. This will result in an easy to adhere surface with a high surface energy compared to polyolefin based substrates.

According to the invention the decorative layer is preferably a pressure laminate, such as high pressure laminate (HPL), continuous pressure laminate (CPL) or direct pressure laminate (DPL). Such pressure laminates contribute to the bend ability of the multi-layer laminate structure and to the design freedom when applying such structure. Additional strength is obtained with a woven pressure laminate. The decorative layer may, for instance, also comprise decorative (melamine faced) paper sheet, veneer sheets, metallic sheets, non-woven fabrics, polymeric films or leather.

The substrate layer has preferably a thickness in the range of 1 to 25 mm to obtain sufficient strength on one hand and sufficient bend ability on the other hand. In the same relation the decorative layer has preferably a thickness in the range of 0,1 to 2,5 mm.

The process according to the invention for the production of a multi-layer laminate structure comprises the steps of a) providing an adhesive film on a substrate layer and/or on a decorative layer, b) placing the decorative layer on the substrate layer, and c) fusion of the adhesive film(s). This is a uncomplicated process that may be performed on readily available equipment without expensive pre-treatments. Both the substrate layer and the decorative layer may be provided with a first respectively second compatible adhesive layer. According to the invention it is however also possible that only one adhesive film is provided which fuses with the substrate layer or with the decorative layer respectively. The fusion may be thermal or pressure induced or by a combination of both.

The process may comprise the step of co extrusion of the substrate layer and the adhesive film. This reduces the number or required steps, reduces costs and is less time consuming. Moreover the co extruded substrate may be produced in different shapes.

According to the invention the process may comprise a preceding step in which a reinforce top layer is provided on the substrate layer. The top layer may be bonded to the substrate layer by an additional adhesive film or by hot melt adhesion. This step may be performed on a readily available flatbed laminator or a roller coat laminator.

In the same process the multi-layer laminate structure may be bend in a desired shape. This intermediate step may be performed before fusion of the adhesive film(s). However this bending step may also be performed at any time after fusion. This requires the additional step of reversing the bonding. After bending, both adhesive layers will be bonded (again). According to the invention such bending is performed in combination with heat treatment and/or pressure treatment. The heat treatment may include a forced cooling after bending in order to improve shape stability.

This process makes it also possible to correct products by reheating and re-bending. Mistakes during the process may therefore be corrected. The number of rejections is reduced and unnecessary scrap is avoided.

The invention also provides a process for the dismantling the multilayer laminate structure comprising the steps of a) heating the multi-layer laminate structure and b) separating the substrate layer and the decorative layer. This process is uncomplicated and may be performed on readily available equipment. The hybrid product is in this way separated in base material ready for recycling. The multi-layer laminate structure meets the cradle-to-cradle principle.

The various aspects of the invention will now be described in more detail and will be elucidated, by way of example only, with reference to the accompanying drawings, in which
- Figure 1 is a sectional view of an example of the multi-layer laminate structure according to the invention, before laminating the substrate layer and the decorative layer;
- Figure 2 is a sectional view of the example of Figure 1 after laminating and fusion of the adhesive layers;
- Figure 3 is a sectional view of the example of Figure 1 and 2, after strong bending;
- Figure 4 is a schematic illustration of a process according to the invention; and
- Figure 5 is a schematic illustration of a bending process for the multi-layer laminate structure.

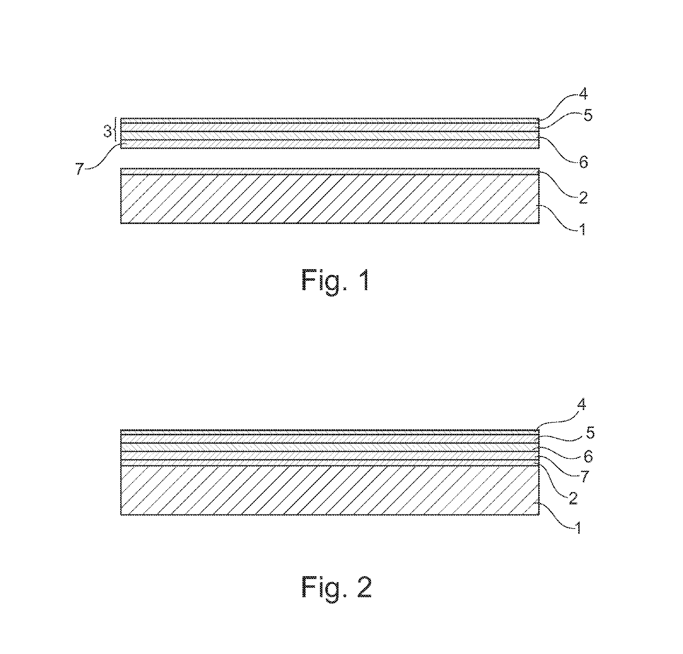

The multi-layer laminate structure of Figure 1 consists of a substrate layer 1. This layer is in general a flexible thermoplastic such as polyolefin, in particular polypropylene or polyethylene, however, also other materials may be applied (MDF, OSB, Plywood, Chipboard). Application of polypropylene makes it possible to introduce a living hinge in the multi-layer laminate substrate.

The substrate layer is provided with a first adhesive film 2. This is a polyolefin adhesive film. This first adhesive film 2 is co extruded with the substrate layer 1. In Figure 1 the co extruded substrate layer 1 and the first adhesive film have a panel shape. However, by applying co extrusion the substrate layer may have different shapes and may therefore be preformed. In the embodiment of figure 1 the substrate layer is single sided provided with an adhesive film, however, also double sided is possible in case on both sides a decorative layer should be provided. It is also possible to cover the substrate layer with a reinforce top layer. The adhesive film will then be provided on the reinforce top layer. The reinforce top layer, which may consist of glass fibre, will provide additional strength, improved flame retardation and improved impact resistance to the substrate layer.

The decorative layer 3 of this example itself consists of several layers (4,5,6) and is typically made of a pressure laminate such as high pressure laminate (HPL), continuous pressure laminate (CPL) or direct pressure laminate (DPL). HPL consists of layers of specially selected kraft and printed decorative papers impregnated with thermosetting synthetic resins. These are fused together under heat and high pressure in a controlled environment so that the component parts consolidate to form a single high density decorative layer.

The decorative layer 3 is provided with a second adhesive film 7. This second adhesive film 7 is compatible with the first adhesive film 2 on the substrate layer. The first and second adhesive film will fuse, when brought together under high temperature. This is presented in Figure 2. By fusion a strong bonding is obtained. Additional pressure during heating may even enhance the strength of the bonding. The bonding is reversible. After heating the bonding will loosen. The multi-layer laminate structure may then be separated in the substrate layer 1 and the decorative layer 3. Both layers may then be recycled at the end of life, meeting accordingly the cradle to cradle principle.

Another beneficial aspect of the reversible bonding is that after reversing the bonding by heating the multi-layer laminate structure may be more easily formed in a desired shape, which provides large design freedom. While cooling down the bonding will recover. The multi-layer laminate structure will observe considerable lower internal tensions compared to prior art laminate structures and has therefore a more stable shape. Forced cooling will further enhance shape stability. Also the differences between forward and backward bending are negligible.

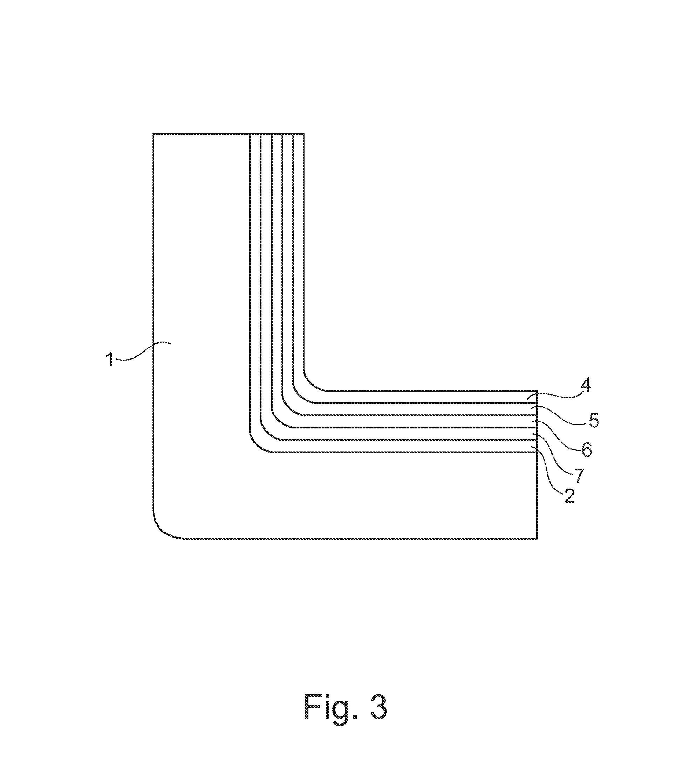

Figure 3 shows the example structure of Figures 1 and 2 after strong bending. Such strong bending is in particular possible in case the thicknesses of both the substrate layer and the decorative layer are designed in ranges provided for by the invention. In this way an optimum of strength and formability is obtained.

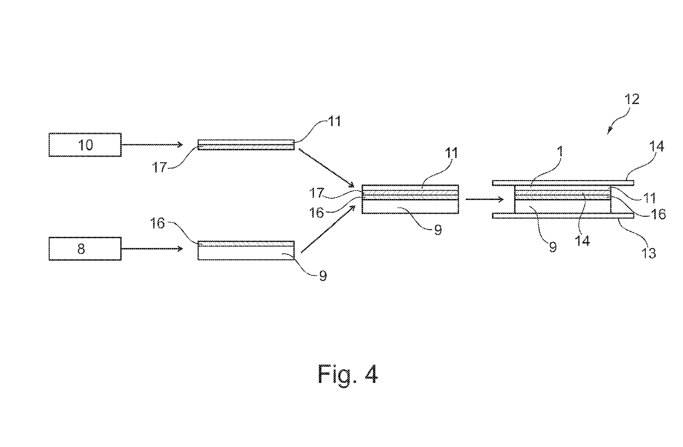

Figure 4 provides a schematic illustration of a process for the production of a multi-layer laminate structure according to the invention. In a first process steps 8 a substrate layer 9 is co extruded with a first adhesive film 16 to a flat panel. According to the teaching of the invention also other shapes may be co extruded. In process step 10 a decorative layer 11 of high pressure laminate is provide with a second adhesive layer 17. In the following process step the decorative layer 11 is placed on the substrate layer 9 such that both the first and second adhesive film 16 respectively 17 are in close contact. The assembly is then placed in a heating equipment 12. The compatible first and second adhesive layer will fuse under high temperature, resulting in a strong bonding after cooling down. Forced cooling may enhance shape stability. The strength of the bonding is further enhanced by putting pressure on heating blocks 13,14 of the heating equipment.

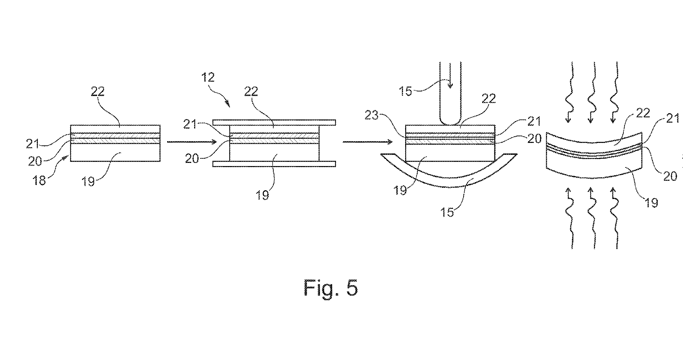

An example process including bending of the multi-layer laminate structure of the invention is illustrated in Figure 5. The laminate panel 18 of the structure according to the invention is placed in heating equipment 12 where under high temperature the bonding of the first and second adhesive film are reversed. The substrate layer 19 and the decorative layer 22 are then separated until the temperature is sufficient low and no fusion between both adhesive films 20, 21 will occur. A contact area 23 remains between them, along which both layer may move relative to each other without introducing strong tensions in the layers. The assembly is then placed on a bending equipment 15. After bending the bend multi-layer structure is heated again such that fusion occurs and the substrate layer 19 and the decorative layer 20 are bonded again. An additional step may be forced cooling of the structure after bending. This will result in a more stable shape.

## Claims

1. Multi-layer laminate structure comprising a substrate layer and at least one decorative layer bonded on the substrate layer, **characterized in that** the substrate layer and the decorative layer are reversible bonded.

2. Multi-layer laminate structure according to claim 1, **characterized in that** the substrate layer is provided with an adhesive film and/or that the decorative layer is provided with an adhesive film.

3. Multi-layer laminate structure according to claim 2, **characterized in that** the adhesive film is a polyolefin resin.

4. Multi-layer laminate structure according to claim 2, **characterized in that** the first adhesive film provided on the substrate layer is compatible with the second adhesive film provided on the decorative layer.

5. Multi-layer laminate structure according to claim 1, **characterized in that** the substrate layer is a thermoplastic.

6. Multi-layer laminate structure according to claim 5, **characterized in that** the substrate layer is a polyolefin.

7. Multi-layer laminate structure according to claim 2, **characterized in that** the adhesive film is coextruded with the substrate layer.

8. Multi-layer laminate structure according to claim 1, **characterized in that** the substrate layer is provided with a reinforced top layer.

9. Multi-layer laminate structure according to claim 1, **characterized in that** decorative layer is a pressure laminate (HPL, CPL, DPL).

10. Multi-layer laminate structure according to claim 1, **characterized in that** the substrate layer has a thickness in the range of 1 to 25 mm. and/or that the decorative layer has a thickness in the range of 0,1 to 2,5 mm.

11. Process for the production of multi-layer laminate structures with reversible bonding comprising the steps of a) providing an adhesive film on a substrate layer and/or on a decorative layer, b) placing the decorative layer on the substrate layer and c) fusion of the adhesive film(s).

12. Process according to claim 11, **characterized in that** the fusion is thermal induced.

13. Process according to claim 11, comprising the step of co extruding the first adhesive film on the substrate layer

14. Process according to claim 11, comprising the step of initially providing a reinforce top layer to the substrate layer.

15. Process according to claim 16, comprising the additional steps of reversing the bonding, bending the multi-layer laminate structure in a desired shape and bonding the layers again.

16. Process for dismantling a multi-layer laminate structure with reversible bonding comprising the steps of a) heating the multi-layer laminate structure and b) separating the substrate layer and the decorative layer
